(19) Europäisches Patentamt

European Patent Office

Office européen des brevets

(11) **EP 1 011 184 A1**

(12) **DEMANDE DE BREVET EUROPEEN**

(43) Date de publication:
21.06.2000 Bulletin 2000/25

(51) Int. Cl.⁷: **H02H 7/085**, E05F 15/00, G01L 1/24

(21) Numéro de dépôt: 98123825.6

(22) Date de dépôt: 15.12.1998

(84) Etats contractants désignés:
**AT BE CH CY DE DK ES FI FR GB GR IE IT LI LU MC NL PT SE**
Etats d'extension désignés:
**AL LT LV MK RO SI**

(71) Demandeur:
**Talltec Technologies Holdings S.A.**
**2012 Luxembourg (LU)**

(72) Inventeurs:
• **Bouamra, Mohamed**
**67000 Strasbourg (FR)**
• Zaldua, Jésus
20280 Hondarribia - Gipuzkoa (ES)
• Vicandi, Javier
20800 Zarautz - Gipuzkoa (ES)
• Iriondo, Jésus
20800 Zarautz - Gipuzkoa (ES)

(74) Mandataire:
**Ravenel, Thierry Gérard Louis et al**
**I C B,**
**Ingénieurs Conseils en Brevets SA,**
**7, rue des Sors**
**2074 Marin (CH)**

(54) **Dispositif de sécurité associé à un panneau coulissant entraîné par un moteur électrique et procédé de mise en oeuvre d'un tel dispositif**

(57)    L'invention concerne un système de sécurité mixte associé à un panneau d'obturation mobile entraîné à coulissement par un moteur électrique (6), ce système de sécurité comprenant des moyens (20) exploitant le signal provenant d'une fibre optique pour arrêter et inverser le sens du mouvement dudit panneau mobile en cas de changement du signal, ainsi que des moyens supplémentaires de sécurité permettant de déterminer sans ambiguïté les positions de fin de course du panneau mobile par l'exploitation conjointe des résultats issus de la mesure de la fréquence des impulsions provoquées par la commutation des balais du moteur électrique (6) entraînant ledit panneau mobile, ainsi que des informations provenant de la fibre optique.

Fig. 4

## Description

La présente invention concerne un procédé de commande dit mixte d'un panneau mobile entraîné à coulissement par un moteur électrique, procédé dans lequel on exploite simultanément le signal provenant d'un capteur de pression à fibre optique pour arrêter et inverser le sens de marche du moteur d'entraînement en cas de variation dudit signal, et la mesure fréquentielle des impulsions provoquées par la commutation des balais du moteur d'entraînement pour effectuer une prédétection d'obstacle et pour déterminer les positions de fin de course du panneau mobile.

L'invention a aussi pour objet un dispositif de sécurité pour un tel panneau mobile comprenant des moyens de détection de la présence d'un corps étranger freinant le mouvement dudit panneau mobile et s'opposant à sa fermeture complète.

L'invention a encore pour objet un capteur d'effort à fibre optique utilisable notamment dans les dispositifs de sécurité du genre susmentionné.

L'invention a enfin pour but de procurer un procédé de calibration du capteur d'effort susmentionné permettant d'accroître la fiabilité du fonctionnement de ce capteur.

De plus en plus de véhicules automobiles sont équipés de lève-vitres électriques, c'est-à-dire de systèmes dans lesquels les vitres sont entraînées à coulissement dans le sens de l'ouverture ou dans le sens de la fermeture par un moteur électrique dont le fonctionnement est commandé par le conducteur du véhicule au moyen d'un interrupteur manuel. De tels systèmes ont permis de réaliser des progrès sensibles en matière de sécurité automobile, dans la mesure où le conducteur peut facilement ouvrir ou fermer les vitres tout en restant attentif aux conditions de circulation et à la conduite de son véhicule. Ces systèmes présentent toutefois d'importants problèmes de fiabilité qui sont souvent liés à l'apparition de pics de courant tors d'un arrêt trop brutal du moteur d'entraînement de la vitre. On sait, en effet, que tout obstacle à l'avancement de la vitre produit, au niveau du moteur, des pics de courant qui sont généralement néfastes, surtout pour certains composants tels que les relais de commande ou les transistors de commutation. De tels pics peuvent apparaître, par exemple lorsque l'automobiliste continue d'actionner l'interrupteur qui commande le fonctionnement du moteur d'entraînement alors que la vitre est déjà arrivée dans sa position de fermeture dans laquelle elle est appliquée contre le cadre de la porte. Des pics de courant peuvent aussi apparaître lorsqu'un corps étranger, par exemple un bras, est en appui sur le rebord de la vitre et s'oppose à la remontée de celle-ci.

Pour remédier aux difficultés susmentionnées, une solution connue consiste à mesurer le niveau maximum du courant d'alimentation fourni au moteur d'entraînement, et à bloquer ce courant au-dessus d'un seuil prédéterminé. Cette mesure est généralement effectuée aux bornes d'un transistor de commutation dont la résistance varie d'un composant à l'autre et reste dépendante de la température. D'autres méthodes utilisent des résistances de précision (mesure de courants) ou des sondes à effet Hall (mesure de champs magnétiques), mais le prix de revient de tels composants est élevé.

Une autre méthode de commande, moins coûteuse et plus efficace, consiste à détecter les impulsions provoquées par la commutation des balais du moteur d'entraînement. Ces impulsions se superposent au courant continu de consommation du moteur, et leur fréquence est proportionnelle à la vitesse du rotor. Une telle technique est décrite dans le brevet américain No 4,870,333 au nom de la société Sidosha Denki Kogyo qui propose un procédé de commande d'un lève-vitres électrique pour véhicule automobile dans lequel le nombre des impulsions générées par le fonctionnement du moteur électrique entraînant la vitre est enregistré dans un compteur. Lorsque le nombre d'impulsions enregistré dans le compteur atteint une valeur maximum prédéterminée, le dispositif de commande qui exploite le système conclut que la vitre est arrivée en position de pleine ouverture et provoque l'arrêt du moteur d'entraînement. Inversement, lorsque la vitre remonte, le nombre d'impulsions enregistré dans le compteur est diminué d'une unité pour chaque tour du moteur d'entraînement. Lorsque ce nombre devient égal à zéro, le système conclut que la vitre est arrivée dans sa position de fermeture dans laquelle elle est appliquée contre le cadre de la porte, et arrête à nouveau le moteur d'entraînement.

Le système ci-dessus a pour principal inconvénient que la vitesse d'ascension de la vitre n'est pas constante et dépend de nombreux paramètres tels que le couple d'entraînement du moteur, les frottements entre la vitre et le cadre de la porte, la vitesse et la trajectoire du véhicule etc. La position de la vitre ne peut, par conséquent, être calculée avec une précision suffisante pour pouvoir déterminer de manière exacte le moment où la fenêtre est complètement fermée. Avec une telle méthode, on peut tout au plus déterminer une zone de fin de course dans laquelle on sait que la vitre est au voisinage du cadre de la porte. Le moteur d'entraînement peut, par conséquent, être arrêté sur ordre du dispositif de commande avant que la fenêtre ne soit complètement fermée. Inversement, le moteur peut continuer à être alimenté en courant alors que la fenêtre est déjà complètement fermée, ce qui produit des pics de courant nefastes pour le moteur et l'électronique de commande. D'autre part, rien dans le brevet Sidosha n'est prévu pour détecter avant pincement une surcharge qui ferait obstacle à l'avancement de la vitre. Enfin, rien n'est prévu pour détecter la présence d'un corps étranger tel qu'une main d'enfant dont l'épaisseur est égale ou inférieure à la hauteur de la zone de fin de course. Or, lors de la fermeture automatique de panneaux mobiles tels que, notamment une vitre d'un véhicule automobile, on doit chercher à garantir la sécurité en évitant le coincement d'un corps étranger tel que, par exemple, un bras ou une main, entre ladite vitre et le cadre de la porte contre lequel celle-ci doit être appliquée. A cet effet, en cas de coincement, un dispositif de sécurité arrête l'entraînement ou inverse le sens du mouvement de la glace. Parmi les dispositifs de sécurité connus, une solution consiste à incorporer un guide d'ondes électromagnétiques, par exemple une fibre optique, à l'intérieur du joint d'étanchéité dans lequel est guidé la vitre. Un émetteur, par exemple une diode laser, injecte un signal lumineux à une extrémité de la fibre. Ce signal se propage jusqu'à un récepteur, par exemple une photodiode, placée à l'autre extrémité de la fibre. En cas d'incident, le corps étranger est entraîné par la glace remontant vers le joint d'étanchéité et exerce une pression sur la fibre optique. Sous l'effet de la pression, la fibre optique se déforme, ce qui entraîne une modification locale de son rayon de courbure. Cette modification du rayon de courbure de la fibre provoque des pertes importantes, et par suite une baisse de l'amplitude du signal optique capté par le récepteur. Il en résulte une baisse de l'amplitude du signal électrique émis par le récepteur vers un circuit de commande qui, en réponse à cette baisse, élabore un signal d'arrêt ou d'inversion du sens de marche du moteur entraînant la glace.

Les dispositifs de sécurité du genre susdécrit qui utilisent des capteurs de pression à fibre optique comme détecteurs d'obstacles présentent de nombreux inconvénients tant au niveau de leur fabrication industrielle qu'au niveau de leur fonctionnement chez l'utilisateur. Ces dispositifs de sécurité doivent, en effet, être produits à grande échelle pour satisfaire les besoins de marchés tels que celui de l'automobile. Ceci suppose donc un processus de fabrication à la fois simple et rapide avec des composants et des matériaux peu coûteux. Il en va de même pour les procédures de test et de calibration qui doivent être rapides et permettre au capteur de conserver ses caractéristiques de fonctionnement dans le temps. Comme on va le voir dans la description qui suit, il est difficile, dans de telles conditions, d'obtenir des produits ayant des caractéristiques homogènes.

Un premier problème est lié au fait qu'il est difficile de pouvoir disposer de quantités importantes et à bas coût de sources optiques présentant des caractéristiques peu dispersées. Ceci concerne notamment la puissance et l'angle d'émission ainsi que le spectre de rayonnement de ces sources.

Un second problème est lié au fait que la fibre optique utilisée dans le capteur doit être fixée à la source optique soit au moyen de connecteurs spécifiques, soit plus simplement par collage. Ceci nécessite plusieurs opérations de conditionnement de l'extrémité de la fibre (dénudage du revêtement, fracture ou polissage), de centrage de la fibre par rapport à la source optique, et enfin de fixation au moyen de résines à durcissement rapide. Une production à grande échelle implique forcément une dispersion importante des rendements à l'injection de puissance dans la fibre, ce qui affecte les performances du capteur.

Comme décrit ci-dessus, les capteurs à fibre optique fonctionnent dans leur majorité sur le principe des pertes induites par la variation du rayon de courbure de ladite fibre sous l'effet d'une pression. La mise en place de la fibre et le conditionnement de la partie sensible du capteur introduisent donc nécessairement une dispersion des contraintes dans la fibre optique, ce qui entraîne une dispersion des performances des capteurs.

On peut également noter que les performances des capteurs dépendent fortement des conditions dans lesquelles ils sont utilisés, et de leur environnement. C'est le cas, par exemple, des applications automobiles où les capteurs doivent fonctionner dans des plages de température ambiante comprises entre -40°C et +85°C. Il est clair que, dans de telles conditions, les caractéristiques de certains composants comme la source optique ne peuvent rester constantes (puissance d'émission et domaine spectral). Il en est de même pour le rendement à l'injection de puissance dans la fibre qui dépend fortement des propriétés thermiques des matériaux utilisés pour la connexion source-fibre.

Le problème est encore plus important au niveau de la partie sensible du capteur. En effet, en supposant que la fibre optique ne soit pas elle-même sensible aux variations de température, les matériaux qui servent de support et de gaine, en général des polymères, peuvent subir des contraintes thermiques, ce qui revient à appliquer des variations de pression sur la fibre. Ces effets, auxquels s'ajoute la sensibilité intrinsèque de la fibre optique à la température, peuvent entraîner des variations de plus de 80% du signal de sortie.

Enfin, aux problèmes liés aux conditions d'utilisation du capteur, s'ajoutent les variations inévitables des caractéristiques de celui-ci provoquées par l'usure normale des matériaux et des composants.

L'énumération des problèmes susmentionnés montre les difficultés qu'il s'agit de surmonter pour pouvoir fabriquer en grandes séries et à moindres coûts des capteurs de pression à fibre optique utilisables comme détecteurs d'obstacles. La sensibilité à certaines grandeurs perturbatrices ainsi que les phénomènes d'usure ne permettent pas de conserver la calibration d'origine. Il en résulte des problèmes de fiabilité voire, dans certains cas, de non fonctionnement des dispositifs de sécurité utilisant de tels capteurs.

La présente invention a pour but de remédier aux problèmes et inconvénients susmentionnés en offrant un dispositif de sécurité fiable pour l'entraînement et la fermeture de panneaux d'obturation coulissant électriquement.

A cet effet, l'invention concerne un procédé de commande mixte d'un panneau mobile entraîné à coulissement par un moteur électrique, comportant les étapes consistant à :

- détecter la présence ou l'absence d'un corps étranger susceptible de s'opposer à la fermeture complète dudit panneau mobile;
- produire un signal d'alarme lorsque ladite présence est détectée;
- mesurer la fréquence des impulsions provoquées par la rotation du moteur électrique entraînant le panneau mobile, et
- arrêter le moteur d'entraînement lorsque la fréquence des impulsions devient sensiblement nulle en l'absence dudit signal d'alarme, ou
- inverser le sens de marche du moteur d'entraînement lorsque la fréquence des impulsions diminue ou devient sensiblement nulle et qu'il y a présence dudit signal d'alarme.

Ainsi, lors de la fermeture de la vitre, on peut déduire qu'en l'absence de signal d'alarme, la vitre est arrivée en butée contre le cadre de la porte et que tout risque d'accident est évité. Inversement, dans le cas de la présence d'un signal d'alarme, on commande immédiatement l'inversion du sens de marche du moteur d'entraînement. Grâce à ces caractéristiques, le procédé de détection mixte selon l'invention permet simultanément d'accroître la sécurité des personnes et de protéger efficacement les parties électriques et électroniques contre les surcourants.

Selon une autre caractéristique du procédé de l'invention, on mesure la fréquence des impulsions provoquées par la rotation du moteur électrique entraînant le panneau mobile, et on arrête ou on inverse le sens de marche dudit moteur lorsque la fréquence de ces impulsions devient inférieure à une fréquence seuil prédéterminée.

Selon encore une autre caractéristique du procédé, on détecte la présence ou l'absence d'un corps étranger susceptible de s'opposer à la fermeture complète du panneau mobile à l'aide d'un capteur de pression à fibre optique.

Selon encore une autre caractéristique du procédé de l'invention, on déduit de la mesure de fréquence des impulsions provoquées par la rotation du moteur électrique d'entraînement une indication de la course du panneau mobile à partir d'une position de référence connue préalablement, et on commande une rampe de décélération de la vitesse du moteur d'entraînement lorsque le panneau mobile arrive dans une zone de fin de course.

Selon encore une autre caractéristique du procédé, la position de référence est la dernière position calculée du panneau mobile avant l'arrêt du moteur d'entraînement.

La mesure de la vitesse de rotation du moteur d'entraînement permet de calculer la course du panneau mobile à partir d'une position de référence préalablement connue. Dans le cas d'un véhicule automobile, du fait des forces d'inertie dues aux secousses, aux effets de friction et aux glissements, la détermination indirecte de la position de la vitre présente un certain taux d'erreur. Ce taux d'erreur est cumulatif. Ainsi, après dix essais de descente et de remontée de la vitre, l'écart cumulé entre la position calculée et la position réelle de ladite vitre est de l'ordre de un à deux centimètres. Celle erreur reste cependant suffisamment faible pour permettre de définir une zone de fin de course pour les mouvements de descente et de montée de la vitre, zone dans laquelle ladite vitre se trouve au voisinage du cadre de la porte contre lequel elle doit être appliquée. Le temps de retard mis par la variation du courant par rapport à la vitesse de rotation du moteur est mis à profit pour limiter les surcourants et pour protéger efficacement le moteur et son unité de commande.

L'invention concerne également un procédé de commande d'un panneau mobile entraîné à coulissement par un moteur électrique, caractérisé en ce qu'il consiste à mesurer la fréquence des impulsions provoquées par la commutation des balais du moteur électrique entraînant le panneau mobile, et à arrêter ou à inverser le sens de marche dudit moteur lorsque la fréquence de ces impulsions devient inférieure à une fréquence seuil prédéterminée.

La fréquence des impulsions étant proportionnelle à la vitesse de rotation du rotor du moteur d'entraînement, il devient possible de détecter la présence d'un obstacle freinant le mouvement du panneau d'obturation et s'opposant à sa remontée. C'est le cas, par exemple, de l'action d'un bras posé sur le rebord d'une vitre d'un véhicule automobile. La comparaison de la vitesse mesurée avec une vitesse de référence permet donc d'effectuer une prédétection d'obstacle et d'éviter, dans certains cas, le pincement. Elle permet également de diminuer de manière notable les pics de courant qui sont particulièrement néfastes, notamment pour l'électronique de commande du moteur d'entraînement.

L'invention concerne également un dispositif de sécurité comprenant des moyens de détection de la présence d'un corps étranger freinant le mouvement d'un panneau mobile entraîné à coulissement par un moteur électrique et s'opposant à sa fermeture, caractérisé en ce que lesdits moyens de détection sont du type indirect, basés sur la mesure de la fréquence des impulsions provoquées par la commutation des balais du moteur électrique.

Selon une autre caractéristique de l'invention, il est proposé d'associer aux moyens de détection du type indirect susmentionnés des seconds moyens de détection directe de la présence d'un corps étranger, ces moyens comprenant un capteur de pression constitué par une fibre optique associée à des moyens d'émission et de réception de signaux optiques se propageant à l'intérieur de ladite fibre.

Un autre but de la présente invention est de procurer un capteur de pression à fibre optique utilisable comme détecteur d'obstacles conservant sa calibration d'origine malgré sa sensibilité à des grandeurs physiques perturbatrices telles que la température et aux phénomènes d'usure des matériaux qui le constituent.

A cet effet, l'invention concerne également un procédé de calibration d'un capteur de pression à fibre optique utilisé comme détecteur d'obstacles dans un système d'entraînement d'un panneau mobile coulissant électriquement, le capteur comprenant un émetteur alimenté électriquement qui injecte un signal lumineux dans une fibre optique, le signal lumineux se propageant jusqu'à un récepteur qui émet, en réponse au signal lumineux transmis par la fibre optique, un signal électrique vers une centrale de commande à microcontrôleur et/ou à microprocesseur qui analyse l'information en provenance dudit récepteur et permet, en cas d'incident, d'arrêter ou d'inverser le sens de marche d'un moteur électrique entraînant le panneau mobile, le procédé étant caractérisé en ce que, pendant les périodes où l'on constate l'arrêt du moteur d'entraînement du panneau mobile, on compare et on corrige les paramètres de fonctionnement du capteur de pression, pris dans des conditions d'environnement quelconques, en fonction des mêmes paramètres d'un capteur étalon pris dans des conditions de référence connues stockées dans une mémoire non volatile accessible au microcontrôleur et/ou au microprocesseur de la centrale de commande.

Grâce à ces caractéristiques, la procédure de calibration du capteur de pression débute dès l'instant où l'arrêt du moteur d'entraînement du panneau mobile est constaté. Préférentiellement, les paramètres de fonctionnement du capteur sont mesurés et corrigés de manière répétitive pendant toute la durée de la période d'arrêt dudit moteur d'entraînement. Durant les périodes de fonctionnement du moteur, seules les dernières corrections des paramètres de fonctionnement du capteur de pression stockées en mémoire seront prises en compte. Les performances du capteur de pression peuvent ainsi être conservées, malgré les phénomènes d'usure et l'existence de grandeurs physiques perturbatrices auxquelles le capteur est sensible.

Selon une première variante de mise en oeuvre, le procédé de l'invention comprend les étapes qui consistent à :

- couper un bref instant le courant électrique d'alimentation de l'émetteur dès l'instant où l'on constate l'arrêt du moteur d'entraînement du panneau mobile;
- mesurer le niveau d'offset du signal électrique émis par le récepteur, puis ramener sa valeur à zéro;
- alimenter à nouveau l'émetteur au moyen d'un courant électrique continu constant $I_0$, et
- mesurer le niveau de sortie $V_S$ du récepteur, et lui affecter un coefficient k tel que $kV_S = V_R$, où $V_R$ est un niveau de référence connu d'un capteur étalon pris dans des conditions de référence connues.

Selon une seconde variante de mise en oeuvre, le procédé de l'invention comprend les étapes qui consistent à :

- alimenter l'émetteur au moyen d'un courant rectangulaire périodique;
- mesurer le niveau haut de sortie $V_S$ du récepteur ainsi que sa variation $\Delta V_S$, et
- effectuer l'opération $V_S(\Delta V_S/\Delta V_R) = V'_S$ et déterminer le coefficient $C = V_R - V'_S$ de façon que $V_S\pi = V_R$, où $V_R$ et $\Delta V_R$ sont des valeurs de référence connues d'un capteur étalon pris dans des conditions de référence connues, le rapport $\Delta V_S/\Delta V_R$ est le coefficient de correction de la sensibilité du capteur de pression, et C est le coefficient de correction de l'offset résiduel dudit capteur.

Selon une autre variante de mise en oeuvre, le procédé de l'invention comprend les étapes qui consistent à :

- alimenter l'émetteur au moyen d'un courant rectangulaire périodique;
- mesurer le niveau haut de sortie $V_S$ du récepteur, ainsi que sa variation $\Delta V_S$;
- calculer la pression appliquée en fonction du niveau de signal mesuré au moyen d'une équation polynomiale de degré supérieur ou égal à 1 dont les coefficients sont initialement déterminés lors d'une première calibration, et
- corriger périodiquement ces coefficients en fonction des résultats de la mesure pour obtenir une mesure fiable de la pression.

Un autre but encore de la présente invention est de procurer un capteur de pression simple et peu coûteux à fabriquer.

D'autres caractéristiques et avantages de la présente invention apparaîtront plus clairement à la lecture de la description qui suit d'un exemple de mise en oeuvre du procédé selon l'invention, cet exemple étant donné à titre purement illustratif et non limitatif en liaison avec les dessins annexés sur lesquels :

- la figure 1 représente une portière d'un véhicule automobile munie du dispositif de sécurité selon l'invention;
- la figure 2 est une vue en coupe selon la ligne II-II de la figure 1;
- la figure 3 est une vue analogue à celle de la figure 2 sur laquelle on a représenté un corps étranger tel qu'un doigt coincé entre la vitre et le cadre de la porte;
- la figure 4 est une représentation schématique du dispositif de sécurité selon l'invention;

- la figure 5 est une représentation schématique d'un capteur de pression à fibre optique fonctionnant en mode transmission;
- la figure 6 est une représentation schématique d'un capteur de pression à fibre optique fonctionnant en mode réflexion;
- la figure 7 est une représentation schématique des moyens de commutation des états de marche-arrêt et de commande du sens de rotation du moteur ainsi que des moyens de détection de type indirect de la présence d'un corps étranger freinant le mouvement de la vitre du véhicule automobile;
- les figures 8 à 12 illustrent deux procédures d'autocalibration du système de sécurité selon l'invention, et
- les figures 13 à 16 sont des vues en perspective de différentes variantes d'exécution du capteur de pression selon l'invention.

La présente invention procède de l'idée générale inventive qui consiste à procurer un système de détection mixte dans lequel les moyens de détection indirecte, basés sur la mesure de la fréquence des impulsions provoquées par la commutation des balais du moteur électrique d'entraînement, permettent de protéger efficacement les éléments électriques et électroniques contre les pics de courant qui leur sont particulièrement néfastes, tandis que les moyens de détection directe, basés sur la mesure de la variation d'une grandeur physique sous l'effet de la présence d'un corps étranger s'opposant à la fermeture complète d'un panneau mobile, permettent d'accroître considérablement la sécurité des personnes.

La présente invention va être décrite en référence à un dispositif de lève-vitres électrique équipant un véhicule automobile. Il va néanmoins de soi que la présente invention s'applique à tout type de panneau mobile coulissant électriquement tel qu'un toit ouvrant d'un véhicule automobile, les portes d'un ascenseur, des portes coupe-feu ou autre.

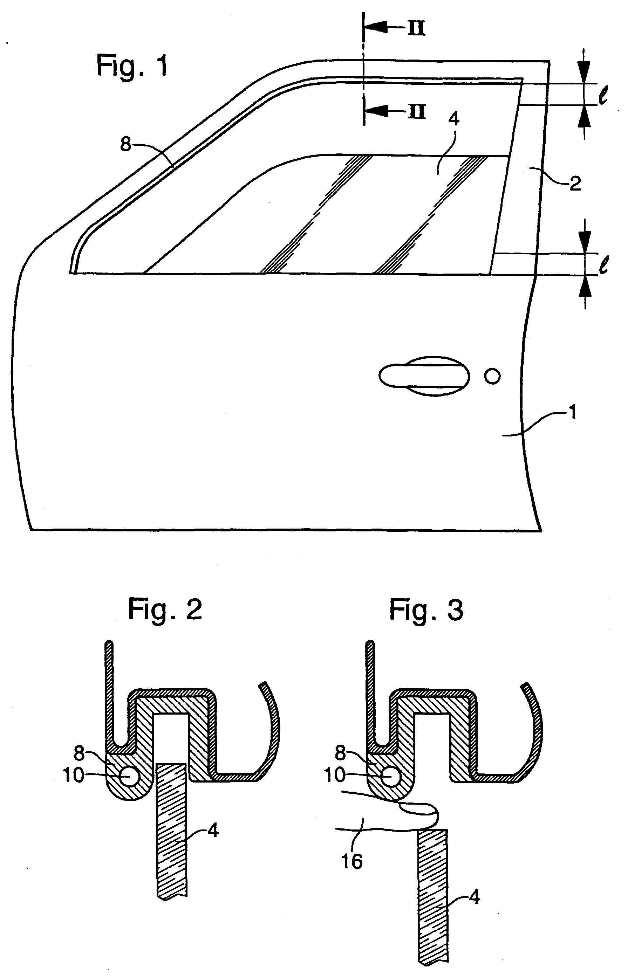

En référence aux figures 1 à 6, on voit une portière 1 d'un véhicule automobile ayant un cadre 2 dans lequel coulisse une vitre 4 sous l'action d'un moteur électrique d'entraînement 6. Le cadre 2 de la portière 1 est muni d'un joint d'étanchéité 8 dans une partie au moins duquel est disposé un guide optique 10 constitué, par exemple, par une fibre optique multimode. Comme cela sera décrit plus en détail par la suite, la fibre optique 10 est associée à des moyens d'émission et de réception respectivement 12 et 14 de signaux optiques se propageant à l'intérieur de ladite fibre 10. Ces moyens sont adaptés pour contrôler le fonctionnement du mécanisme de lève-vitres électrique ou du système antivol du véhicule qu'ils équipent.

Comme il ressort de la figure 2, la fibre optique 10 est placée dans la garniture d'étanchéité 8 à l'extérieur du chemin de la vitre 4. La vitre 4 remontant sous l'action de son moteur d'entraînement 6, si un doigt 16 est coincé entre ladite vitre 4 et le cadre 2 de la portière 1 (figure 3), la fibre optique 10 est écrasée par le doigt 16. Sous l'effet de la pression exercée par le doigt 16, la fibre optique 10 se déforme, ce qui entraîne une modification locale de son rayon de courbure. Celle courbure entraîne une atténuation de la puissance des signaux optiques se propageant dans la fibre optique 10. Il en résulte une baisse de l'amplitude des signaux électriques émis par le récepteur 14 vers une unité centrale 18 qui, en réponse à cette baisse, élabore un signal d'arrêt ou d'inversion du sens de marche du moteur 6 entraînant la vitre 4.

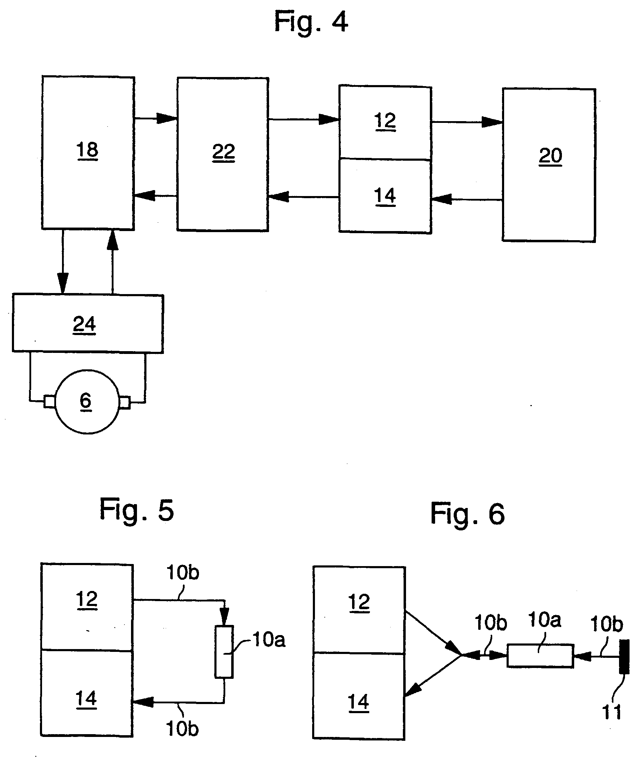

Sur la figure 4, on voit une représentation schématique du dispositif de sécurité selon l'invention. Un capteur de pression, désigné dans son ensemble par la référence numérique générale 20, comprend ta fibre optique multimode 10 susmentionnée qui fonctionne sur le principe de la modulation d'intensité de la lumière qui s'y propage en fonction de la pression appliquée. Le capteur de pression 20 est associé aux moyens d'émission 12 et de réception 14 des signaux optiques se propageant à l'intérieur de ladite fibre 10.

Selon une première variante d'exécution représentée à la figure 5, le capteur de pression 20 fonctionne en mode transmission. La fibre optique 10 comprend une partie 10a qui constitue l'élément sensible du capteur de pression 20, et une partie 10b servant de ligne de transmission de la lumière. Les moyens d'émission 12 injectent un signal lumineux à une extrémité de la fibre 10. Ces moyens d'émission 12 comprennent une source optique qui est conditionnée de manière à être solidairement fixée à la fibre optique 10, ceci afin d'éviter l'utilisation de connecteurs optiques trop coûteux. La source optique sera de préférence une diode électroluminescente. Le signal lumineux injecté dans la fibre optique 10 se propage jusqu'au détecteur 14 tel qu'une photodiode également solidairement fixée à l'autre extrémité de ladite fibre 10.

Selon une caractéristique particulièrement avantageuse de l'invention, la diode électroluminescente et la photodiode sont du type SMD (Surface Mount Device), serties dans un même boîtier recevant également les deux extrémités de la fibre optique 10 formant le capteur de pression 20. Le boîtier comporte d'autre part des moyens de connexion facilitant son montage sur une carte électronique.

Selon une seconde variante d'exécution représentée à la figure 6, le capteur de pression 20 peut également fonctionner en mode réflexion. Dans ce dernier cas, la source 12 et le récepteur 14 sont situés à une même extrémité de la fibre 10, tandis qu'un réflecteur 11 réfléchissant les signaux lumineux est disposé à l'autre extrémité de ladite fibre 10. Les fonctions d'émission et de réception sont préférentiellement assurées par une diode laser munie de sa propre cellule photodétectrice.

Un circuit d'alimentation 22 alimente la source optique 12 en courant. Ce courant peut être continu et/ou variable périodiquement dans le temps. Selon une caractéristique préférentielle de l'invention, le courant sera continu durant les périodes de fonctionnement du moteur d'entraînement 6, et de forme rectangulaire périodique durant les périodes d'arrêt. Le circuit 22 comporte également des circuits de conversion et d'amplification des courants issus du détecteur 14.

Le dispositif de sécurité selon l'invention comprend également un circuit de commande 24 du moteur d'entraînement 6. Ce circuit de commande 24 a une structure de type pont pour le contrôle bidirectionnel dudit moteur 6. Il peut être constitué entièrement à base de semi-conducteurs ou comporter des relais. L'utilisation de transistors de type MOS permet de commuter les relais avec un courant très faible, ce qui améliore la durée de vie des composants. Un autre avantage réside dans le fait que le même composant MOS peut être utilisé comme élément de mesure du courant afin de limiter ce dernier, de détecter les fins de course et de protéger le moteur 6 contre les pics de courant.

Le système ci-dessus est géré par l'unité centrale 18 susmentionnée. Cette unité centrale 18 comprend un microcontrôleur et/ou un microprocesseur qui gère les fonctions de contrôle, de mesure et de calibration du capteur de pression 20 au moyen de programmes et d'algorithmes informatiques implantés dans une mémoire non volatile accessible audit microcontrôleur. L'unité centrale 18 dispose pour cela de moyens de conversion analogique-digitale. Le contrôle par l'unité centrale 18 des états d'arrêt et de marche ainsi que du sens de rotation du moteur d'entraînement 6 s'effectue par l'intermédiaire du circuit de commande 24. Ce dernier mesure et transmet également à l'unité centrale 18 les variations du courant d'alimentation du moteur 6 afin de détecter les positions de fin de course de la vitre 4 et de protéger l'électronique contre les pics de courant qui en résultent, comme cela sera décrit plus en détail par la suite.

L'unité centrale 18 gère également l'état des entrées-sorties 26 en provenance ou à destination d'autres organes internes ou externes au système. On sait, en effet, que les microcontrôleurs actuels peuvent gérer un grand nombre d'entrées-sorties, ce qui permet au système d'interagir avec plusieurs centres de commande ou de contrôle. Ceci confère au système une grande souplesse d'utilisation et d'adaptation en fonction des applications recherchées. Parmi les commandes d'entrées-sorties, on peut citer :

- les commandes manuelles pour le passager principal et les autres passagers. Ces commandes peuvent être du type graduel. Elles peuvent également être à action rapide, au sens ou une simple pression commande l'ouverture ou la fermeture complète de la vitre 4;
- les commandes centralisées de fermeture de tous les panneaux. Ces commandes peuvent être manuelles, provenir de l'ordinateur central ou du système de fermeture centralisée des portes;

- une fonction d'alarme (sécurité) dans le cas de l'introduction d'un objet entre la vitre et la coulisse.

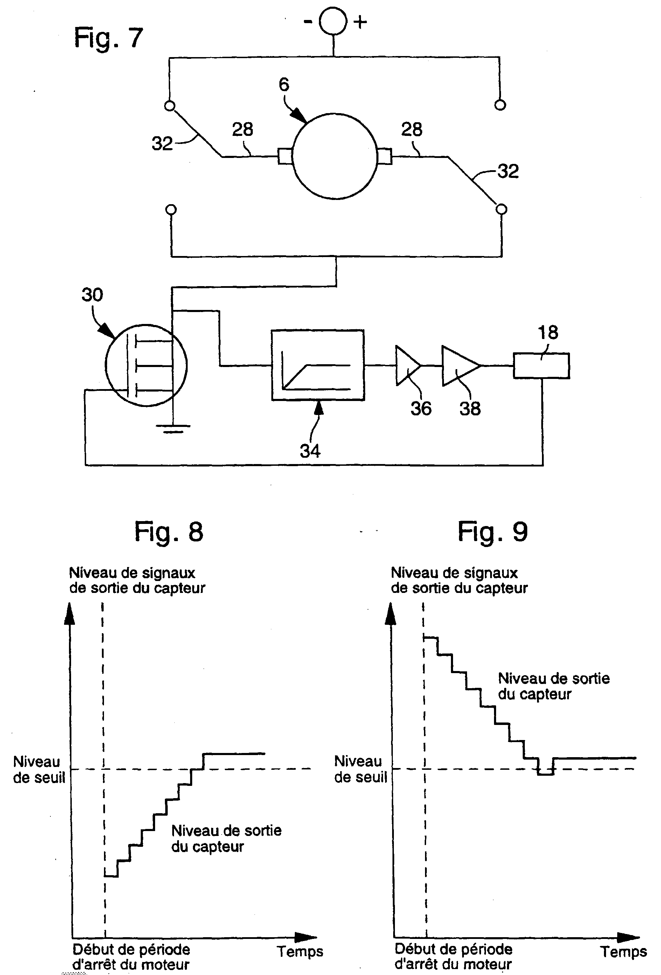

Conformément à un premier aspect du procédé selon l'invention, on mesure la fréquence des impulsions provoquées par la commutation des balais tels que 28 du moteur électrique 6 entraînant la vitre 4, et on arrête l'entraînement de ladite vitre 4 lorsque la fréquence des impulsions est inférieure à une fréquence seuil prédéterminée. A cet effet, on dispose de moyens de détection du type indirect, basés sur la mesure de la fréquence des impulsions provoquées par la commutation des balais 28 du moteur d'entraînement 6. Comme on le voit sur la figure 7, ces moyens de détection comprennent un transistor MOS 30 aux bornes duquel sont recueillies les impulsions provoquées par la commutation des balais 28. Selon une caractéristique complémentaire de l'invention, le transistor MOS 30 commande en outre la commutation des relais tels que 32 du moteur électrique 6, et détermine donc le sens de déplacement du panneau mobile 4. Les impulsions recueillies aux bornes du transistor MOS 30 passent ensuite à travers un filtre 34, un amplificateur 36, puis sont remises en forme au moyen d'un comparateur 38. Finalement, les impulsions sont envoyées vers des moyens de comparaison permettant de comparer la fréquence des impulsions à une fréquence seuil. Ces moyens sont constitués par l'unité centrale 18 qui calcule la fréquence des impulsions et la compare à la fréquence seuil stockée en mémoire. Finalement, lorsque la fréquence des impulsions devient inférieure à la fréquence seuil, l'unité centrale 18 produit un deuxième signal d'alarme qui la conduit à arrêter ou à inverser le sens de marche du moteur d'entraînement 6. Il devient ainsi possible de détecter la fin de course ou la présence d'un corps étranger tel que, par exemple, un bras freinant le mouvement de la vitre 4 et s'opposant à sa remontée. La comparaison de la fréquence mesurée avec une fréquence de référence permet donc d'effectuer une prédétection d'obstacle et d'éviter, dans certains cas, le pincement. Elle permet aussi de protéger le moteur d'entraînement 6 ainsi que son circuit de commande 24 contre les pics de courant particulièrement néfastes.

Selon un second aspect du procédé, l'unité centrale 18 mesure la fréquence des impulsions provoquées par la commutation des balais 28 du moteur d'entraînement 6 et en déduit la vitesse de rotation du rotor dudit moteur 6. Connaissant la vitesse de rotation du moteur 6, l'unité centrale 18 peut calculer la course de la vitre 4 depuis une position de référence préalablement connue et enregistrée en mémoire. Celle position de référence correspond à la dernière position calculée de la vitre 4 avant l'arrêt du moteur d'entraînement 6. Ainsi, lorsque la vitre 4 arrive dans une zone de fin de course à une distance l du bord supérieur ou inférieur du cadre 2 de la portière 1 dans lequel ladite vitre 4 coulisse, l'unité centrale 18 constitue les moyens qui permettent de programmer une rampe de décélération de la vitesse du moteur d'entraînement 6, et de couper l'alimentation de ce dernier lorsque la fréquence des impulsions devient sensiblement nulle. Sachant que la variation du courant d'alimentation du moteur 6 présente un retard par rapport à la vitesse de rotation dudit moteur 6 selon une constante de temps $\tau = L/R$ (où L est l'inductance et R la résistance du moteur d'entraînement 6), la commande d'une rampe de décélération et l'arrêt du moteur 6 lorsque la fréquence des impulsions devient sensiblement nulle permet de protéger efficacement le moteur 6 ainsi que son circuit de commande 24 contre les surcourants.

La méthode de détermination indirecte de la position de la vitre 4 décrite ci-dessus présente cependant un inconvénient. En effet, lorsque la vitre 4 arrive dans sa position de fin de course et que son moteur d'entraînement 6 s'arrête, il n'est pas possible de déterminer si cet arrêt est dû au fait que la vitre 4 est en butée contre le cadre 2 de la portière 1 dans lequel elle coulisse, ou si l'arrêt est dû à la présence d'un corps étranger coincé entre la vitre 4 et le montant dudit cadre 2. C'est pourquoi, on propose d'associer aux moyens de détection du type indirect des moyens de détection directe de la présence d'un corps étranger, ces moyens comprenant le capteur de pression 20 à fibre optique 10 décrit précédemment. Ainsi, lors de la fermeture de la vitre 4, on peut déduire qu'en l'absence de signal d'alarme provenant du capteur de pression 20, la vitre 4 est arrivée en butée de fin de course contre le montant du cadre 2, et que tout risque d'accident est évité. Inversement, si le capteur de pression 20 produit un signal d'alarme, l'unité centrale 18 commande immédiatement l'inversion du sens de marche du moteur d'entraînement 6.

La présente invention a également pour but de fournir un capteur de pression 20 conservant ses performances d'origine malgré sa sensibilité à des grandeurs physiques perturbatrices telles que la température et aux phénomènes d'usure des matériaux qui le constituent. A cet effet, il est proposé, pendant les périodes où l'unité centrale 18 constate l'arrêt du moteur d'entraînement 6, de comparer et de corriger les paramètres de fonctionnement du capteur de pression 20, pris dans des conditions d'environnement quelconques, en fonction des mêmes paramètres d'un capteur étalon pris dans des conditions de référence connues stockées dans une mémoire non volatile accessible au microcontrôleur de ladite unité centrale 18. Préférentiellement, les paramètres de fonctionnement du capteur de pression 20 sont mesurés et corrigés de manière répétitive pendant toute la durée de la période d'arrêt du moteur d'entraînement 6. Lors de la remise en marche du moteur d'entraînement 6, seules les dernières corrections des paramètres de fonctionnement du capteur 20 seront prises en compte.

Selon une première variante de mise en oeuvre, le procédé de calibration du capteur de pression 20 comprend les étapes qui consistent à :

- couper un bref instant le courant électrique d'alimentation de l'émetteur 12 dès l'instant où l'unité centrale 18 constate l'arrêt du moteur d'entraînement 6;
- mesurer le niveau d'offset du signal électrique émis par le récepteur 14, puis ramener sa valeur à zéro au moyen d'un algorithme stocké en mémoire du microcontrôleur de l'unité centrale 18;
- alimenter à nouveau l'émetteur 12 au moyen d'un courant électrique continu constant $I_O$, et
- mesurer le niveau de sortie $V_S$ du récepteur 12, et lui affecter un coefficient k tel que $kV_S = V_R$, où $V_R$ est un niveau de référence connu d'un capteur étalon pris dans des conditions de référence connues.

Lorsque l'émetteur 12 n'est pas alimenté, le signal de sortie du capteur de pression 20 n'est pas nul. En effet, le circuit de détection du capteur 20 est en général composé d'un photodétecteur 14 suivi d'un circuit d'amplification comprenant un amplificateur opérationnel. Or, tout photodétecteur présente un courant dit d'obscurité dépendant de sa technologie, de son courant de polarisation et de la température. Ce courant qui fluctue dans le temps est amplifié et contribue en partie à la génération d'une tension parasite d'offset en sortie. De plus, tout amplificateur opérationnel présente un signal d'offset en tension et courant non nul, avec une dérive plus ou moins importante selon la qualité du composant et les conditions de température. A moins d'utiliser des composants très stables et donc très coûteux, il est préférable de mesurer périodiquement ces valeurs d'offset et de les retrancher au moyen d'un programme informatique stocké dans la mémoire du microcontrôleur de l'unité centrale 18, pour ne conserver que le signal utile provenant du capteur de pression 20. Une fois le signal d'offset retranché, il faut, en l'absence de toute pression, ramener périodiquement le niveau du signal du capteur de pression 20 à un niveau de référence, de manière à opérer avec un seuil de déclenchement fixe. On peut ainsi s'affranchir des dispersions des caractéristiques de fonctionnement des composants (source 12 et détecteur 14), des conditions d'injection du signal optique dans la fibre 10, et des fluctuations de ce dernier liées à ladite fibre.

Selon une seconde variante de mise en oeuvre, le procédé de calibration du capteur de pression 20 comprend les étapes qui consistent à :

- alimenter l'émetteur 12 au moyen d'un courant rectangulaire périodique;
- mesurer le niveau haut de sortie $V_S$, et
- effectuer l'opération $V_S(\Delta V_S/\Delta V_R) = V_S'$ et

déterminer le coefficient $C = V_R - V_S'$ de façon que

$V_S'' = V_R$, où $V_R$ et $\Delta V_R$ sont des valeurs de référence connues d'un capteur étalon pris dans des conditions de référence connues, le rapport $\Delta V_S/\Delta V_R$ est le coefficient de correction de la sensibilité du capteur de pression 20, et C est le coefficient de correction de l'offset résiduel dudit capteur 20.

Selon une caractéristique préférentielle du procédé de l'invention, l'émetteur 12 est alimenté au moyen d'un courant rectangulaire périodique obtenu en superposant à un courant constant $I_O$ une faible variation $\Delta I_O$ périodique, de telle sorte que la variation du signal optique qui en résulte puisse être considérée comme linéaire.

Pour des pressions appliquées faibles, le signal détecté peut être considéré comme linéaire et s'écrire sous la forme $V_S = I_O$ GT où :

- G tient notamment compte du gain global du capteur de pression 20, du rendement d'injection et du rendement du détecteur 14;
- T représente la fonction de transfert optique du capteur de pression 20, et
- $I_O$ représente la puissance de la source 12 et donc, indirectement, son courant de polarisation.

En mesurant la variation $\Delta V_S$ en sortie du capteur de pression 20 suite à une variation faible $\Delta I_O$ du courant de polarisation, et en effectuant le rapport de ces deux grandeurs, on obtient une mesure de la fonction de transfert optique du capteur de pression 20, et donc de sa sensibilité. D'autre part, effectuer l'opération $V_S' = V_S(\Delta V_S/\Delta V_R)$ revient à normaliser la sensibilité du capteur de pression 20 pris dans des conditions d'environnement quelconques par rapport à la sensibilité d'un capteur étalon pris dans des conditions de référence. La correction d'offset supplémentaire C telle que $C + V_S' = V_R$ permet de compenser les différences résiduelles liées à la dispersion des caractéristiques des composants et à leurs variations en fonction des conditions d'environnement.

Selon une troisième variante de mise en oeuvre, le procédé de calibration de l'invention comprend les étapes qui consistent à :

- alimenter l'émetteur 12 au moyen d'un courant rectangulaire périodique;
- mesurer le niveau haut de sortie $V_S$ du récepteur 14, ainsi que sa variation $\Delta V_S$;
- calculer la pression appliquée en fonction du niveau de signal mesuré au moyen d'une équation polynomiale de degré supérieur ou égal à 1 dont les coefficients sont initialement déterminés lors d'une première calibration, et
- corriger périodiquement ces coefficients en fonction des résultats de la mesure pour obtenir une mesure fiable de la pression.

Préférentiellement, l'émetteur 12 est alimenté au moyen d'un courant rectangulaire périodique obtenu en superposant à un courant continu $I_O$ une faible variation périodique $\Delta I_O$.

Cette troisième procédure de calibration nécessite une première calibration du capteur de pression 20 qui permet de calculer la pression appliquée en fonction de la tension mesurée au moyen d'une approximation polynomiale de degré 3 ou 4. Cette méthode permet d'effectuer des corrections simples des coefficients du polynôme, ou des corrections plus élaborées au moyen d'algorithmes spécifiques.

Selon une autre variante encore, le procédé d'autocalibration peut utiliser la correction à courant de polarisation variable et à seuil de déclenchement constant illustrée aux figures 8 et 9. On voit, sur ces deux figures, que durant les périodes d'arrêt du moteur d'entraînement 6, on fait croître ou décroître, par exemple par échelon, le courant de polarisation de l'émetteur 12 jusqu'à ce que le niveau du signal de sortie du capteur de pression 20 soit sensiblement égal au niveau du seuil de déclenchement de l'alarme (à la résolution près du système). Lorsque cette condition est réalisée, on cale le niveau du courant de polarisation de l'émetteur 12 pour que le signal de sortie du capteur de pression 20 soit à une valeur connue, supérieure au niveau de seuil de déclenchement de l'alarme. Il est à noter que la tension de seuil du comparateur 38 peut ici être fixée soit par un circuit extérieur au microcontrôleur de l'unité centrale 18, soit par le microcontrôleur lui-même (par programmation).

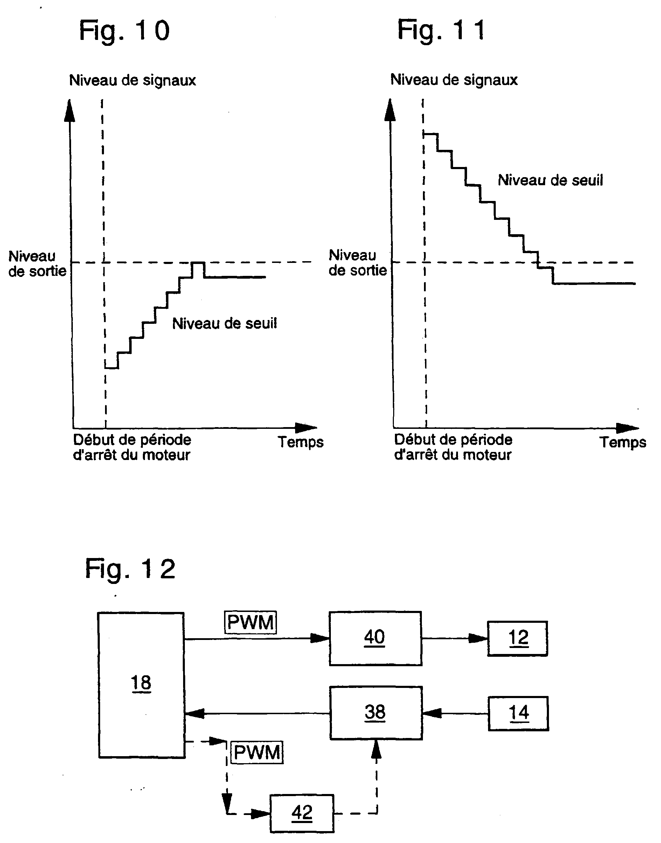

Selon une autre variante encore, le procédé de calibration peut utiliser la correction à seuil de déclenchement variable et à courant de polarisation fixe qui est illustrée par les figures 10 et 11. Dans ce cas, le courant de polarisation de l'émetteur 12 est constant, et on fait croître ou décroître, par exemple par échelon, la valeur du signal de seuil du comparateur 38 qui fixe le seuil d'alarme, jusqu'à ce que celle valeur devienne sensiblement égale à la valeur du signal de sortie du capteur de pression 20 (à la résolution près du système). Puis on cale le seuil à une valeur connue inférieure au signal de sortie. On voit, dans ce second cas, comment le microcontrôleur de l'unité centrale 18 commande un circuit extérieur pour ajuster le niveau de seuil de déclenchement de l'alarme. L'avantage, dans ce cas, est qu'il n'est pas nécessaire de mesurer le signal de sortie du capteur de pression 20 (et donc de munir le microcontrôleur d'un convertisseur analogique/numérique), ce qui permet de choisir des composants microcontrôleurs à bas coût. Mais il est à noter que le seuil peut également être fixé par programmation. Dans ce cas, il est nécessaire d'utiliser un convertisseur analogique/numérique pour pouvoir communiquer avec le microcontrôleur. Il faut également remarquer que l'ensemble des procédures d'autocalibration qui ont été décrites dans ce brevet peuvent être combinées entre elles.

Sur la base des procédés susdécrits, il est donc possible de corriger les paramètres de fonctionnement du capteur de pression 20 de deux manières distinctes, soit en corrigeant le courant de polarisation de l'émetteur 12, soit en corrigeant le seuil de déclenchement de l'alarme.

A cet effet, et comme représenté à la figure 12, le microcontrôleur de l'unité centrale 18, non muni d'un convertisseur analogique/numérique, élabore un signal PWM rectangulaire de fréquence fixe, mais avec des durées d'impulsions variables. On parle alors de modulation en durée des impulsions ou PWM (Pulse Width Modulation). Chaque valeur de durée peut être codée sur quatre ou huit bits ou plus par le microprocesseur. Le signal PWM est envoyé sur un intégrateur 40 du type filtre passe-bas qui transforme les impulsions en niveaux de tension distincts. On peut ainsi, en faisant varier le codage du signal PWM, programmer la forme et le niveau du courant de polarisation de l'émetteur 12. Il est également possible, au besoin, de modifier au moyen d'un intégrateur 42 la valeur du signal de seuil du comparateur 38 qui fixe le seuil d'alarme. Il existe également d'autres manières de modifier les signaux susmentionnés au moyen d'autres procédés de modulation. A titre d'exemple, on peut citer la modulation en fréquence des impulsions ou PFM (Pulse Frequency Modulation) ou la modulation codée des impulsions (Pulse Code Modulation).

La procédure d'autocalibration peut être étendue aux moyens de détection indirecte du système. En effet, il n'est pas établi que le procédé de détection indirecte soit toujours fiable dans le temps. Il faut s'attendre à ce que le rendement du moteur d'entraînement 6 et des éléments de transmission évoluent dans le temps. Il en est de même des frictions de la vitre 4 contre le joint d'étanchéité 8 qui peuvent évoluer sous l'effet des déformations du cadre 2 de la portière 1. De même, il faut s'attendre à ce que le mouvement de la vitre change selon la vitesse de déplacement du véhicule. Ne pas prendre en compte ces paramètres de perturbation pourrait conduire à un dysfonctionnement du système. Un suivi et une évaluation dans le temps de la vitesse de palier de la vitre 4 dans la zone où le mouvement de celle-ci est sensiblement uniforme, par exemple par la méthode des moyennes glissantes, pourrait permettre de corriger le calcul de la position de la vitre 4, ainsi que la valeur de la fréquence seuil pour la prédétection d'obstacles.

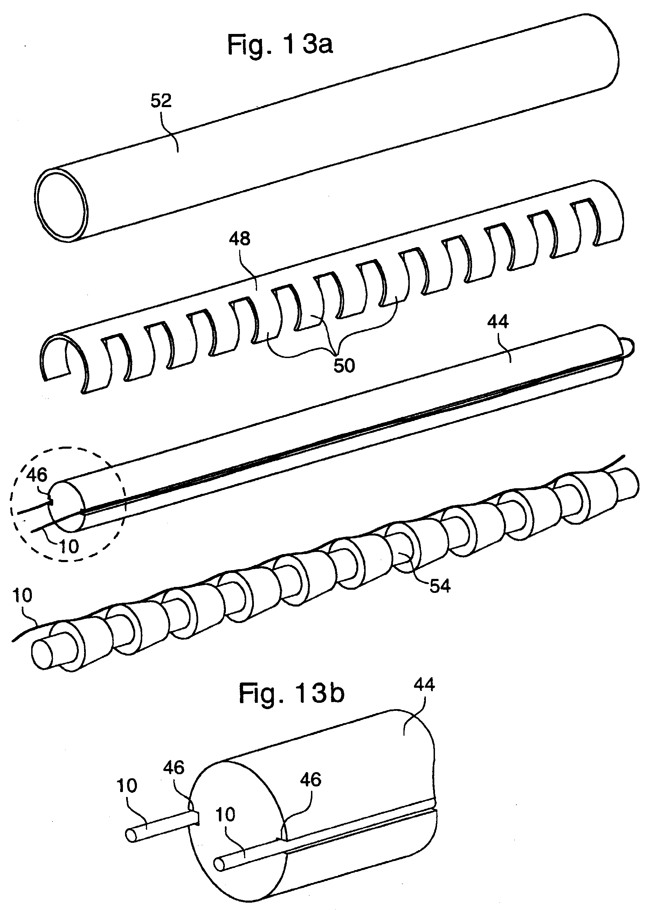

La présente invention a également pour but de fournir un capteur de pression à fibre optique simple et peu coûteux à fabriquer. A cet effet, et comme on le voit sur la figure 13a, le capteur de pression selon l'invention comprend une âme centrale réalisée en une mousse ou en un caoutchouc souple qui se présente sous la forme d'un support 44 sensiblement cylindrique ou de forme allongée à section polygonale. On pratique à la surface du support 44 deux gorges telles que 46 diamétralement opposées qui s'étendent parallèlement à l'axe longitudinal dudit support 44 et dans lesquelles la fibre optique 10 vient se loger sans contrainte (voir la figure 13b qui est une vue de détail de la région de la figure 13a entourée d'un trait mixte). Le support cylindrique 44 et sa fibre optique 10 sont insérés dans une enveloppe 48 fendue longitudinalement et réalisée, par exemple, en un matériau plastique mince et dur dans lequel ont été découpées une pluralité de mâchoires de serrage telles que 50. Ces mâchoires 50 servent à courber la fibre optique 10 par pression élastique et à modifier localement son rayon de courbure. Le capteur de pression ainsi constitué est finalement enveloppé dans une gaine 52 réalisée en une mousse ou en un matériau très souple. Selon une variante également représentée à la figure 13a, l'âme centrale du capteur de pression selon l'invention peut être réalisée sous la forme d'un support 54 formé d'une succession périodique d'éléments tronconiques le long desquels la fibre optique 10 est fixée. Cette forme d'exécution a pour mérite d'améliorer la sensibilité du capteur en créant des microcourbures initiales.

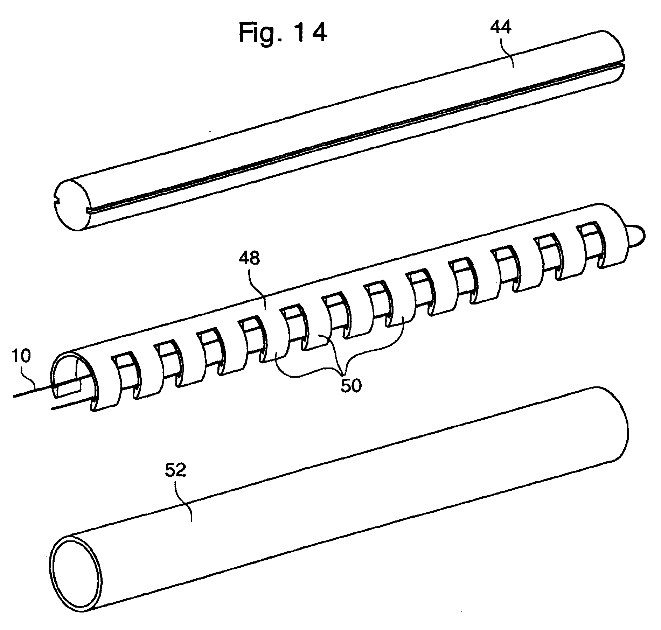

Selon une autre variante d'exécution représentée à la figure 14, la fibre optique 10 est montée directement sur la face intérieure des mâchoires 50 de l'enveloppe 48. A cet effet, l'extrémité libre desdites mâchoires 50 est légèrement recourbée afin de maintenir et de guider la fibre optique 10 le long de l'enveloppe 48. Cette forme d'exécution a comme avantage de maintenir la fibre optique 10 rectiligne. On a en effet constaté que plus la fibre optique employée dans de tels capteurs est courbée, moins longue est la durée de vie desdits capteurs.

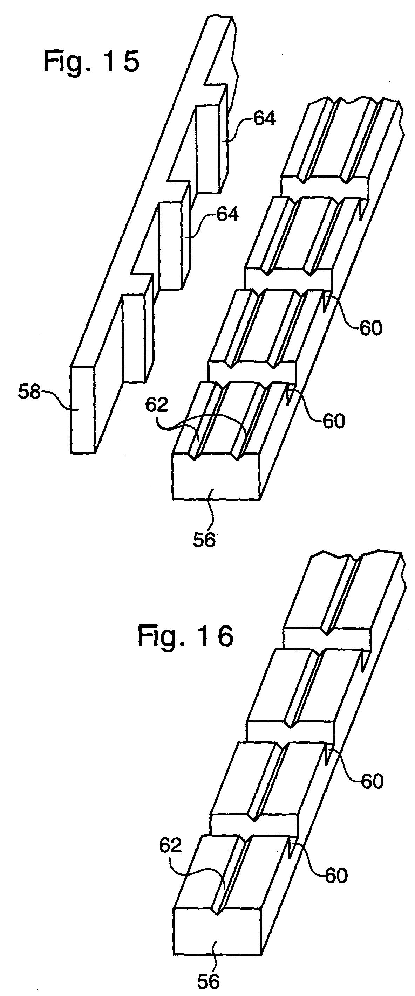

Selon encore une autre variante d'exécution représentée à la figure 15, la fibre optique 10 est prise en sandwich entre une première et une deuxième bandes respectivement 56 et 58 réalisées à partir de deux matériaux élastomères de même type mais de duretés différentes. La première bande 56, réalisée au moyen d'un matériau relativement dur, présente une succession de cavités transversales telles que 60 régulièrement réparties le long de ladite bande 56. Dans le cas d'un fonctionnement en mode transmission, la face supérieure de la bande 56 présente deux rainures telles que 62 dans lesquelles la fibre optique 10 vient se loger. Ces rainures 62 sont disposées parallèlement à et de part et d'autre de l'axe de symétrie longitudinal de la bande 56 et présentent un profil en V ou semi-circulaire. Les cavités 60 de la première bande 56 sont partiellement ou totalement comblées par des plots tels que 64 présentant une forme complémentaire à celle desdites cavités 60 et disposées en sous-face de la deuxième bande 58. Le matériau élastomère utilisé pour réaliser la deuxième bande 58 est du même type que celui employé pour la première bande 56, mais présente une dureté sensiblement plus faible. Ainsi, les première et deuxième bandes 56 et 58 sont complémentaires tant par la forme géométrique que pour l'alternance en dureté des matériaux. Finalement, la fibre optique 10 est logée entre les deux bandes 56 et 58 et peut conserver un profil rectiligne ou être légèrement et périodiquement courbée. Dans le cas d'un fonctionnement en mode réflexion, une seule rainure 62 est nécessaire (figure 16). Selon une variante, la deuxième bande 58 peut être plate, réalisée au moyen d'une certaine épaisseur d'un matériau élastomère sensiblement mou.

L'espacement des mâchoires 50 ou des cavités 60 définit la période de microcourbure. Pour obtenir une sensibilité optimale du capteur de pression, la période de microcourbure sera choisie de manière à obtenir un couplage fort entre les modes guidés dans le coeur de la fibre optique 10, et les modes rayonnés par la gaine.

Cette période optimale dépend des caractéristiques optogéométriques de la fibre optique 10 multimode utilisée. Si la fibre optique 10 est du type à saut d'indice, la période de microcourbure T doit vérifier la relation :

$$T \le \frac{2\pi\rho^2 k n_c}{1 + 2\rho k n_c \sqrt{\Delta}}$$

où $k = 2\pi/\lambda$ est le module du vecteur d'onde, $\rho$ et $n_c$ sont respectivement le rayon et l'indice de réfraction du coeur de la fibre 10, et $\Delta$ est la différence relative entre les indices de coeur et de gaine de la fibre optique 10.

Pour une fibre à gradient d'indice, la période de microcourbure optimale doit être une valeur multiple de la période T donnée par la relation :

$$T \le \rho\pi\sqrt{\frac{2}{\Delta}}$$

où $\rho$ et $\Delta$ sont respectivement le rayon de coeur de la fibre 10 et la différence relative entre les indices de coeur et de gaine de la fibre optique 10.

La sensibilité à la pression étant plus importante dans le cas des fibres à gradient d'indice, c'est ce type de fibre qui sera choisi de préférence.

Selon une autre caractéristique de l'invention, la fibre optique 10 peut être du type plastique, entièrement constituée de matériaux polymères.

Il va de soi que diverses variantes et modifications simples entrent dans le cadre de la présente invention.

**Revendications**

1. Procédé de commande mixte d'un panneau mobile (4) entraîné à coulissement par un moteur électrique (6), comportant les étapes consistant à :

- détecter la présence ou l'absence d'un corps étranger susceptible de s'opposer à la fermeture complète dudit panneau mobile (4);
- produire un signal d'alarme lorsque ladite présence est détectée;
- mesurer la fréquence des impulsions provoquées par la rotation du moteur électrique (6) entraînant le panneau mobile (4), et
- arrêter le moteur d'entraînement (6) lorsque la fréquence des impulsions devient sensiblement nulle en l'absence dudit signal d'alarme, ou
- inverser le sens de marche du moteur d'entraînement (6) lorsque la fréquence des impulsions diminue ou devient sensiblement nulle et qu'il y a présence dudit signal d'alarme.

2. Procédé selon la revendication 1, dans lequel on mesure la fréquence des impulsions provoquées par la rotation du moteur électrique (6) entraînant le panneau mobile (4), et on arrête ou on inverse le sens de marche dudit moteur (6) lorsque la fréquence de ces impulsions devient inférieure à une fréquence seuil prédéterminée.

3. Procédé selon l'une quelconque des revendications 1 ou 2, caractérisé en ce que l'on détecte ladite présence ou absence d'un corps étranger susceptible de s'opposer à la fermeture complète du panneau mobile (4) à l'aide d'un capteur de pression (20) à fibre optique.

4. Procédé selon l'une quelconque des revendications 1 à 3, caractérisé en ce que l'on déduit de la mesure de fréquence des impulsions provoquées par la rotation du moteur électrique d'entraînement (6) une indication de la course du panneau mobile (4) à partir d'une position de référence connue préalablement et en ce que l'on commande une rampe de décélération de la vitesse du moteur d'entraînement (6) lorsque le panneau mobile (4) arrive dans une zone de fin de course.

5. Procédé selon la revendication 4, caractérisé en ce que la position de référence est la dernière position calculée du panneau mobile (4) avant l'arrêt du moteur d'entraînement (6).

6. Procédé selon l'une quelconque des revendications 1 à 5, caractérisé en ce que la fréquence est la fréquence des impulsions provoquées par la commutation des balais (28) du moteur électrique (6).

7. Procédé de commande d'un panneau mobile (4) entraîné à coulissement par un moteur électrique (6), caractérisé en ce qu'il consiste à mesurer la fréquence des impulsions provoquées par la commutation des balais (28) du moteur électrique (6) entraînant le panneau mobile (4), et à arrêter ou à inverser le sens de marche dudit moteur (6) lorsque la fréquence de ces impulsions devient inférieure à une fréquence seuil prédéterminée.

8. Dispositif de sécurité, notamment pour la mise en oeuvre du procédé selon l'une quelconque des revendications 1 à 7, comprenant des moyens de détection de la présence d'un corps étranger freinant le mouvement d'un panneau mobile (4) entraîné à coulissement par un moteur électrique (6) et s'opposant à sa fermeture, caractérisé en ce que lesdits moyens de détection sont du type indirect, c'est-à-dire basés sur la mesure de la fréquence des impulsions provoquées par la commutation des balais (28) du moteur électrique (6).

9. Dispositif de sécurité selon la revendication 8, caractérisé en ce que les moyens de détection du type indirect comprennent un transistor MOS (30) aux bornes duquel sont recueillies les impulsions provoquées par la commutation des balais (28) du moteur électrique (6), ces impulsions passant ensuite à travers un filtre (34) et un amplificateur (36), avant d'être remises en forme au moyen d'un comparateur (38).

10. Dispositif de sécurité selon la revendication 9, caractérisé en ce que le transistor MOS (30) commande en outre la commutation des relais (32) du moteur électrique (6), et détermine donc le sens de déplacement du panneau mobile (4).

11. Dispositif de sécurité selon l'une quelconque des revendications 8 à 10, caractérisé en ce qu'il comprend en outre des moyens de comparaison permettant de comparer la fréquence des impulsions provoquées par la commutation des balais (28) du moteur d'entraînement (6) du panneau mobile (4) à une fréquence seuil.

12. Dispositif de sécurité selon l'une quelconque des revendications 8 à 11, caractérisé en ce qu'il comprend en outre des moyens permettant de programmer une rampe de décélération de la vitesse du moteur d'entraînement (6) du panneau mobile (4) lorsque ce dernier arrive dans une zone de fin de course.

13. Dispositif de sécurité selon les revendications 11 et 12, caractérisé en ce que les moyens de comparaison et de programmation de la rampe de décélération comprennent une unité centrale (18) à microcontrôleur et/ou à microprocesseur.

14. Dispositif de sécurité selon l'une quelconque des revendications 8 à 13, caractérisé en ce qu'il comporte en outre des seconds moyens de détection de la présence d'un corps étranger freinant le mouvement du panneau mobile (4), ces moyens comprenant un capteur de pression (20) constitué par une fibre optique (10) associée à des moyens d'émission et de réception (12, 14) de signaux optiques se propageant à l'intérieur de ladite fibre (10).

15. Dispositif de sécurité selon la revendication 14, caractérisé en ce que le capteur de pression (20) fonctionne en mode transmission.

16. Dispositif de sécurité selon la revendication 14, caractérisé en ce que le capteur de pression (20) fonctionne en mode réflexion.

17. Dispositif de sécurité selon la revendication 15, caractérisé en ce que les moyens d'émission (12) comprennent une diode électroluminescente, et en ce que les moyens de réception (14) comprennent une photodiode.

18. Dispositif de sécurité selon la revendication 17, caractérisé en ce que la diode électroluminescente et la photodiode sont du type SMD.

19. Dispositif de sécurité selon la revendication 18, caractérisé en ce que la diode électroluminescente et la photodiode sont serties dans un même boîtier recevant également les deux extrémités de la fibre optique (10) formant le capteur de pression (20), ce boîtier étant d'autre part muni de moyens de connexion facilitant sa fixation sur une carte électronique.

20. Dispositif de sécurité selon la revendication 16, caractérisé en ce que les fonctions d'émission (12) et de réception (14) sont assurées par une diode laser munie de sa propre cellule photodétectrice.

21. Dispositif de sécurité selon la revendication 14, caractérisé en ce que la fibre optique (10) est disposée le long d'au moins un bord d'une ouverture (2) destinée à être obturée par le panneau mobile (4).

22. Procédé de calibration d'un capteur de pression (20) à fibre optique utilisé comme détecteur d'obstacles dans un système d'entraînement d'un panneau mobile (4) au moyen d'un moteur électrique, le capteur (20) comprenant un émetteur (12) alimenté électriquement qui injecte un signal lumineux dans une fibre optique (10), le signal lumineux se propageant jusqu'à un récepteur (14) qui émet, en réponse au signal lumineux transmis par la fibre optique (10), un signal électrique vers une centrale de commande (18) à microcontrôleur et/ou à microprocesseur qui analyse l'information en provenance dudit récepteur (14) et permet, en cas d'incident, d'arrêter ou d'inverser le sens de marche du moteur électrique (6) entraînant le panneau mobile (4), le procédé étant caractérisé en ce que, pendant les périodes où l'on constate l'arrêt du moteur d'entraînement (6) du panneau mobile (4), on compare et on corrige les paramètres de fonctionnement du capteur de pression (20), pris dans des conditions d'environnement quelconques, en fonction des paramètres correspondants d'un capteur étalon pris dans des conditions de référence connues stockées dans une mémoire non volatile accessible au microcontrôleur de la centrale de commande (18).

23. Procédé selon la revendication 22, caractérisé en ce qu'il comprend les étapes qui consistent à :

- couper durant un bref instant le courant électrique d'alimentation de l'émetteur (12) dès l'instant où l'on constate l'arrêt du moteur d'entraînement (6) du panneau mobile (4);
- mesurer le niveau d'offset du signal électrique émis par le récepteur (14), puis ramener sa valeur à zéro;
- alimenter à nouveau l'émetteur (12) au moyen d'un courant électrique continu $I_O$, et
- mesurer le niveau de sortie $V_S$ du récepteur (14), et lui affecter un coefficient k tel que $kV_S = V_R$ , où $V_R$ est un niveau de référence connu d'un capteur étalon pris dans des conditions de référence connues.

24. Procédé selon la revendication 22, caractérisé en ce qu'il comprend les étapes qui consistent à :

- alimenter l'émetteur (12) au moyen d'un courant rectangulaire périodique;
- mesurer le niveau haut de sortie $V_S$ du récepteur (12) ainsi que sa variation $\Delta V_S$, et
- effectuer l'opération $V_S(\Delta V_R/\Delta V_S) = V'_S$ et déterminer le coefficient $C = V_R - V_S'$ de façon que
  $V_S'' = V_R$ , où $V_R$ et $\Delta V_R$ sont des valeurs de référence connues d'un capteur étalon pris dans des conditions de référence connues, le rapport $\Delta V_R/\Delta V_S$ est le coefficient de correction de la sensibilité du capteur de pression (20), et C est le coefficient de correction de l'offset résiduel dudit capteur (20).

25. Procédé selon la revendication 22, caractérisé en ce qu'il comprend les étapes qui consistent à :

- alimenter l'émetteur (12) au moyen d'un courant rectangulaire périodique;
- mesurer le niveau haut de sortie $V_S$ du récepteur (14), ainsi que sa variation $\Delta V_S$;

- calculer la pression appliquée en fonction du niveau de signal mesuré au moyen d'une équation polynomiale de degré supérieur ou égal à 1 dont les coefficients sont initialement déterminés lors d'une première calibration, et
- corriger périodiquement ces coefficients en fonction des résultats de la mesure pour obtenir une mesure fiable de la pression.

26. Procédé selon l'une quelconque des revendications 24 ou 25, caractérisé en ce que, durant les périodes de fonctionnement du moteur d'entraînement (6), l'émetteur (12) est alimenté au moyen d'un courant continu, et en ce que, durant les périodes d'arrêt du moteur d'entraînement (6), l'émetteur (12) est alimenté au moyen d'un courant rectangulaire périodique obtenu en superposant à un courant constant $I_O$ une faible variation $\Delta I_0$ périodique, de telle sorte que la variation du signal optique qui en résulte puisse être considérée comme linéaire.

27. Procédé selon l'une quelconque des revendications 22 à 26, caractérisé en ce que la mesure et la correction des paramètres de fonctionnement du capteur de pression (20) sont effectuées de manière répétitive, pendant toute la durée de la période d'arrêt du moteur d'entraînement (6) du panneau mobile (4).

28. Procédé selon l'une quelconque des revendications 22 à 27, caractérisé en ce que, durant les périodes de fonctionnement du moteur d'entraînement (6) du panneau mobile (4), seules les dernières corrections des paramètres de fonctionnement du capteur de pression (20) stockées en mémoire sont prises en compte.

29. Procédé de calibration d'un capteur de pression (20) à fibre optique utilisé comme détecteur d'obstacles dans un système d'entraînement d'un panneau mobile (4) au moyen d'un moteur électrique, le capteur (20) comprenant un émetteur (12) alimenté électriquement qui injecte un signal lumineux dans une fibre optique (10), le signal lumineux se propageant jusqu'à un récepteur (14) qui émet, en réponse au signal lumineux transmis par la fibre optique (10), un signal électrique vers une centrale de commande (18) à microcontrôleur et/ou à microprocesseur qui analyse l'information en provenance dudit récepteur (14) et permet, en cas d'incident, d'arrêter ou d'inverser le sens de marche du moteur électrique (6) entraînant le panneau mobile (4), le procédé étant caractérisé en ce que, durant les périodes d'arrêt du moteur d'entraînement (6), on fait croître ou décroître le courant de polarisation de l'émetteur (12) jusqu'à ce que le niveau du signal de sortie du capteur de pression (20) soit sensiblement égal au niveau de seuil de déclenchement de l'alarme, et en ce que, lorsque cette condition est réalisée, on fixe le niveau du courant de polarisation de l'émetteur (12) pour que ledit signal de sortie dudit capteur de pression (20) soit à une valeur connue, supérieure au niveau de seuil de déclenchement de l'alarme.

30. Procédé de calibration d'un capteur de pression (20) à fibre optique utilisé comme détecteur d'obstacles dans un système d'entraînement d'un panneau mobile (4) au moyen d'un moteur électrique, le capteur (20) comprenant un émetteur (12) alimenté électriquement qui injecte un signal lumineux dans une fibre optique (10), le signal lumineux se propageant jusqu'à un récepteur (14) qui émet, en réponse au signal lumineux transmis par la fibre optique (10), un signal électrique vers une centrale de commande (18) à microcontrôleur et/ou à microprocesseur qui analyse l'information en provenance dudit récepteur (14) et permet, en cas d'incident, d'arrêter ou d'inverser le sens de marche du moteur électrique (6) entraînant le panneau mobile (4), le procédé étant caractérisé en ce que, durant les périodes d'arrêt du moteur d'entraînement (6), on fait croître ou décroître la valeur du signal de seuil d'un comparateur (38) qui fixe le seuil d'alarme, jusqu'à ce que cette valeur devienne sensiblement égale à la valeur du signal de sortie du capteur de pression (20), et en ce que, lorsque cette condition est réalisée, on fixe le seuil d'alarme à une valeur connue inférieure audit signal de sortie dudit capteur de pression (20).

31. Procédé selon l'une quelconque des revendications 29 ou 30, caractérisé en ce que le microcontrôleur de l'unité centrale (18) élabore un signal rectangulaire de fréquence fixe, mais avec des durées d'impulsions variables, ce signal étant ensuite envoyé sur un intégrateur (40, 42) qui transforme les durées d'impulsions en niveaux de tension distincts, de sorte que l'on peut ainsi programmer la forme et le niveau du courant de polarisation de l'émetteur (12), ou modifier la valeur du signal de seuil du comparateur (38) qui fixe le seuil d'alarme.

32. Procédé selon l'une quelconque des revendications 29 ou 30, caractérisé en ce que le microcontrôleur de l'unité centrale (18) élabore un signal dont les impulsions sont modulées en fréquence, ce signal étant ensuite envoyé sur un intégrateur (40, 42) qui transforme ledit signal en niveaux de tension distincts, de sorte que l'on peut ainsi programmer la forme et le niveau du courant de polarisation de l'émetteur (12), ou modifier la valeur du signal de seuil du comparateur (38) qui fixe le seuil d'alarme.

33. Procédé selon l'une quelconque des revendications 29 ou 30, caractérisé en ce que le microcontrôleur de l'unité centrale (18) élabore un signal utilisant la modulation codée des impulsions, ce signal étant ensuite envoyé sur un intégrateur (40, 42) qui transforme ledit signal en niveaux de tension distincts, de sorte que l'on peut ainsi programmer la forme et le niveau du courant de polarisation de l'émetteur (12), ou modifier la valeur du signal de seuil du comparateur (38) qui fixe le seuil d'alarme.

34. Procédé de calibration caractérisé en ce qu'il comprend la mise en oeuvre en combinaison de l'un quelconque des procédés selon les revendications 22, 23, 24, 25, 29 et 30.

35. Capteur de pression à fibre optique, notamment pour un dispositif de sécurité selon l'une quelconque des revendications 14 à 21, caractérisé en ce qu'il comprend une âme centrale qui se présente sous la forme d'un support (44) sensiblement cylindrique ou allongé et à section polygonale à la surface duquel sont pratiquées deux gorges (46) diamétralement opposées qui s'étendent parallèlement à l'axe longitudinal dudit support (44) et dans lesquelles une fibre optique (10) vient se loger sans contrainte, ledit support cylindrique (44) et sa fibre optique (10) étant insérés dans une enveloppe (48) fendue longitudinalement dans laquelle ont été découpées une pluralité de mâchoires de serrage (50), ces mâchoires (50) servant à courber la fibre optique (10) par pression élastique et à modifier localement son rayon de courbure, l'ensemble ainsi constitué étant finalement enveloppé dans une gaine (52).

36. Capteur de pression selon la revendication 35, caractérisé en ce que ledit support (44) comporte une succession périodique d'éléments tronconiques le long desquels la fibre optique (10) est fixée.

37. Capteur de pression selon l'une quelconque des revendications 35 ou 36, caractérisé en ce que la fibre optique est montée sur la face intérieure des mâchoires de serrage (50) de l'enveloppe (48), l'extrémité libre desdites mâchoires (50) étant recourbée afin de maintenir et de guider la fibre optique (10) le long de ladite enveloppe (50).

38. Capteur de pression à fibre optique, notamment pour un dispositif de sécurité selon l'une quelconque des revendications 14 à 21, caractérisé en ce qu'il comprend une fibre optique (10) prise en sandwich entre une première et une deuxième bandes (56, 58), la première bande (56), réalisée en un matériau élastomère sensiblement dur, présentant une succession de cavités transversales (60) disposées le long de ladite bande (56) ainsi qu'au moins une rainure (62) dans laquelle la fibre optique (10) vient se loger, cette rainure (62) étant disposée parallèlement à l'axe de symétrie longitudinal de la bande (56), lesdites cavités (60) étant partiellement ou totalement comblées par des plots (64) présentant une forme complémentaire à celle desdites cavités (60) et disposées en sous-face de la deuxième bande (58), lesdits plots (64) étant réalisés en un matériau élastomère sensiblement plus mou que le premier.

**39.** Capteur de pression selon l'une quelconque des revendications 35 à 38, caractérisé en ce que la fibre optique (10) est du type à saut d'indice, et en ce que la période de microcourbure T définie par l'espacement des mâchoires (50) ou des cavités (60) doit vérifier la relation :

$$T \le \frac{2\pi\rho^2 kn_c}{1 + 2\rho kn_c\sqrt{\Delta}}$$

où $k = 2\pi/\lambda$ est le module du vecteur d'onde, $\rho$ et $n_c$ sont respectivement le rayon et l'indice de réfraction du coeur de la fibre (10), et $\Delta$ est la différence relative entre les indices de coeur et de gaine de la fibre optique (10).

**40.** Capteur de pression selon l'une quelconque des revendications 35 à 38, caractérisé en ce que la fibre optique (10) est du type à gradient d'indice, et en ce que la période de microcourbure définie par l'espacement des mâchoires (50) ou des cavités (60) doit être une valeur multiple de la période T donnée par la relation :

$$T \le \rho\pi\sqrt{\frac{2}{\Delta}}$$

où $\rho$ et $\Delta$ sont respectivement le rayon de coeur de la fibre (10) et la différence relative entre les indices de coeur et de gaine de la fibre optique (10).

**41.** Capteur de pression selon l'une quelconque des revendications 35 à 40, caractérisé en ce que la fibre optique (10) est du type plastique.

EP 1 011 184 A1

Fig. 1

Fig. 2

Fig. 3

16

# Fig. 4

# Fig. 5

# Fig. 6

## Fig. 7

## Fig. 8

Niveau de signaux
de sortie du capteur

Niveau
de seuil

Niveau de sortie
du capteur

Début de période
d'arrêt du moteur

Temps

## Fig. 9

Niveau de signaux
de sortie du capteur

Niveau de sortie
du capteur

Niveau
de seuil

Début de période
d'arrêt du moteur

Temps

# Fig. 10

Niveau de signaux

Niveau
de sortie

Niveau de seuil

Début de période
d'arrêt du moteur

Temps

# Fig. 11

Niveau de signaux

Niveau de seuil

Niveau
de sortie

Début de période
d'arrêt du moteur

Temps

# Fig. 12

PWM → 40 → 12

18

38 ← 14

PWM

42

## Fig. 13a

52

48

50

44

46

10

54

10

## Fig. 13b

44

46

10

46

10

# Fig. 14

44

48

10

50

52

Fig. 15

58

64

64

62

60

60

56

Fig. 16

62

60

60

56

Office européen
des brevets

**RAPPORT DE RECHERCHE EUROPEENNE**

Numéro de la demande

EP 98 12 3825

## DOCUMENTS CONSIDERES COMME PERTINENTS

| Catégorie | Citation du document avec indication, en cas de besoin, des parties pertinentes | Revendication concernée | CLASSEMENT DE LA DEMANDE |
|---|---|---|---|
| Y | DE 44 16 803 A (BROSE FAHRZEUGTEILE) 17 novembre 1994 (1994-11-17) * le document en entier * | 1-11, 14-21 | H02H7/085 E05F15/00 G01L1/24 |
| Y | EP 0 345 914 A (RIKEN KK) 13 décembre 1989 (1989-12-13) * colonne 1, ligne 26 - colonne 6, ligne 8; figures 1,2A * | 1-11, 14-21 | |
| A | DE 197 24 952 A (ASMO CO LTD) 18 décembre 1997 (1997-12-18) * abrégé * | 1,7 | |
| Y | DE 44 23 104 A (LEON HELMA CHRISTINA ;BECKHAUSEN KARLHEINZ (DE)) 4 janvier 1996 (1996-01-04) | 22,29,30 | |
| A | * colonne 3, ligne 54 - ligne 56 * * colonne 4, ligne 42 - colonne 5, ligne 4 * * colonne 6, ligne 46 - colonne 7, ligne 42; figures 1,2,4 * | 35 | |
| Y | DE 40 30 607 A (SIEMENS AG) 16 avril 1992 (1992-04-16) * abrégé * | 22,29,30 | **DOMAINES TECHNIQUES RECHERCHES** H02H E05F G01L |
| A | US 5 428 923 A (WAGGAMON DENNIS W) 4 juillet 1995 (1995-07-04) * abrégé; revendications 1,2,4,13 * * colonne 4, ligne 64 - colonne 5, ligne 30; figures 1-3 * | 32,33 | |
| A | EP 0 419 267 A (HERGA ELECTRIC) 27 mars 1991 (1991-03-27) * page 3, ligne 43 - page 4, ligne 3 * * page 3, ligne 15 - page 5, ligne 16 * * page 7, ligne 12 - page 9, ligne 32; figures 1,3,8-10 * | 24-26,31 | |

-/--

Le présent rapport a été établi pour toutes les revendications

| Lieu de la recherche | Date d'achèvement de la recherche | Examinateur |
|---|---|---|
| LA HAYE | 26 août 1999 | Guillaume, G |

Office européen
des brevets

**RAPPORT DE RECHERCHE EUROPEENNE**

Numéro de la demande

EP 98 12 3825

## DOCUMENTS CONSIDERES COMME PERTINENTS

| Catégorie | Citation du document avec indication, en cas de besoin, des parties pertinentes | Revendication concernée | CLASSEMENT DE LA DEMANDE |
|---|---|---|---|
| A | GB 2 125 572 A (STANDARD TELEPHONES CABLES LTD) 7 mars 1984 (1984-03-07) * page 1, ligne 128 - page 2, ligne 15; figure 4 * | 38 | |
| | | | **DOMAINES TECHNIQUES RECHERCHES** |

Le présent rapport a été établi pour toutes les revendications

| Lieu de la recherche | Date d'achèvement de la recherche | Examinateur |
|---|---|---|
| LA HAYE | 26 août 1999 | Guillaume, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen**

**des brevets**

Numéro de la demande

EP 98 12 3825

---

## REVENDICATIONS DONNANT LIEU AU PAIEMENT DE TAXES

La présente demande de brevet européen comportait lors de son dépôt plus de dix revendications

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées, à savoir les revendication(s):

☐ Aucune taxe de revendication n'ayant été acquittée dans les délais prescrits, le présent rapport de recherche européenne a été établi pour les dix premières revendications.

---

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☒ Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

**Office européen des brevets**

**ABSENCE D'UNITÉ D'INVENTION
FEUILLE SUPPLÉMENTAIRE B**

Numéro de la demande

EP 98 12 3825

La division de la recherche estime que la présente demande de brevet européen ne satisfait pas à l'exigence relative à l'unité d'invention et concerne plusieurs inventions ou pluralités d'inventions, à savoir :

1. revendications: 1-21

   Commande mixte d'un panneau mobile avec dispositif de sécurité

2. revendications: 22-41

   Procédé de calibration d'un capteur de pression à fibre optique

**ANNEXE AU RAPPORT DE RECHERCHE EUROPEENNE
RELATIF A LA DEMANDE DE BREVET EUROPEEN NO.**

EP 98 12 3825

La présente annexe indique les membres de la famille de brevets relatifs aux documents brevets cités dans le rapport de recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

26-08-1999

| Document brevet cité au rapport de recherche | | Date de publication | Membre(s) de la famille de brevet(s) | | Date de publication |
|---|---|---|---|---|---|
| DE 4416803 | A | 17-11-1994 | JP | 7113376 A | 02-05-1995 |
| EP 0345914 | A | 13-12-1989 | JP | 1311883 A | 15-12-1989 |
| | | | JP | 1311238 A | 15-12-1989 |
| | | | JP | 2596791 B | 02-04-1997 |
| | | | JP | 1311239 A | 15-12-1989 |
| | | | JP | 2596792 B | 02-04-1997 |
| | | | CA | 1326280 A | 18-01-1994 |
| | | | DE | 68912411 D | 03-03-1994 |
| | | | DE | 68912411 T | 25-08-1994 |
| | | | US | 4970446 A | 13-11-1990 |
| DE 19724952 | A | 18-12-1997 | JP | 10061315 A | 03-03-1998 |
| | | | JP | 10061318 A | 03-03-1998 |
| | | | CA | 2208137 A | 13-12-1998 |
| | | | US | 5774046 A | 30-06-1998 |
| DE 4423104 | A | 04-01-1996 | AUCUN | | |
| DE 4030607 | A | 16-04-1992 | AUCUN | | |
| US 5428923 | A | 04-07-1995 | AT | 145303 T | 15-11-1996 |
| | | | CA | 2057650 A,C | 26-08-1992 |
| | | | DE | 69215127 D | 19-12-1996 |
| | | | DE | 69215127 T | 22-05-1997 |
| | | | EP | 0501858 A | 02-09-1992 |
| EP 0419267 | A | 27-03-1991 | GB | 2236388 A | 03-04-1991 |
| | | | DE | 69019652 D | 29-06-1995 |
| | | | DE | 69019652 T | 21-12-1995 |
| | | | US | 5138152 A | 11-08-1992 |
| GB 2125572 | A | 07-03-1984 | AU | 560013 B | 26-03-1987 |
| | | | AU | 1741183 A | 09-02-1984 |
| | | | DE | 3325945 A | 09-02-1984 |
| | | | JP | 59090025 A | 24-05-1984 |

EPO FORM P0460

Pour tout renseignement concernant cette annexe : voir Journal Officiel de l'Office européen des brevets, No.12/82